# EUROPEAN PATENT SPECIFICATION

(11) **EP 3 165 446 B1**
(45) Date of publication and mention of the grant of the patent: **26.09.2018**
(21) Application number: 15193719.0
(22) Date of filing: 09.11.2015
(51) Int. Cl.: B64C 1/14

(54) **AIRCRAFT DOOR ASSEMBLY**
FLUGZEUGTÜRANORDNUNG
ENSEMBLE PORTE D'AÉRONEF

(43) Date of publication of application: 10.05.2017
(73) Proprietor: Airbus Operations GmbH, 21129 Hamburg (DE)
(72) Inventor: ERBEN, Johann Konrad, 21129 Hamburg (DE)
(74) Representative: Isarpatent

(56) References cited:
- US-A- 4 720 065
- US-A1- 2005 133 667
- US-A1- 2011 042 517
- US-B1- 6 378 806

## Description

The present invention relates to a door assembly, specifically for outwardly opening plug-type or hinge-type aircraft doors, for example for use as overwing exits (OWE) in passenger aircraft.

Although the invention is explained and discussed in conjunction with a hinge-type aircraft door, the principles of the invention may easily be transferred to other types doors as well, for example coach doors, trolleybus doors, train doors, freight containers, isolating doors for refrigerating chambers or vehicles or similar.

Self-sealing doors such as coach doors, trolleybus doors, train doors, isolating doors for refrigerating chambers or vehicles or aircraft doors may employ so-called plug-type doors which are designed to seal itself in the door frame by taking advantage of a pressure difference, for example between an aircraft cabin on the inside and the atmosphere around the aircraft in flying altitude on the outside. The pressurization forces the door body into the door frame which may be inversely wedge-shaped or which may include stop members at or around the door jamb that match corresponding door stop members arranged around the outer circumference of the door body. The higher pressure on the inside exerts a force onto the seating of the door body within the door frame or onto the bearing surfaces of the corresponding stop members and retains the door within the door frame, preventing the door from springing open until after release of the pressure or other active deployment of the door.

Those pressure-induced loads need to be redirected into the door frame and, subsequently, into the surrounding structures, such as the fuselage of an aircraft. Since the pressure-induced loads act substantially perpendicularly to the door body, for example from within the aircraft towards outboard of the aircraft, a conventional door structure may include bearing members in the form of rails or beams at the door jamb that may be spaced apart in different horizontal planes along the width of the door body and fixedly connected to the fuselage structure.

For example, document US 4,720,065 A discloses an aircraft door structure with load bearing members for transferring pressure loads from the door to the frame and thus to the fuselage structure. The load bearing beams mounted at the aircraft door have stop members engaging with corresponding stop elements on the frame. Document US 6,378,806 B1 discloses an aircraft door for an aircraft cabin having redundant door stops secured to the door edges and cooperating with redundant frame stops secured to a door frame in an aircraft body. Document US 2011/0042517 A1 discloses a door including a leaf and a frame including an opening configured to take the leaf, the leaf adopting a closed position to block the opening and another position to reveal the opening. A bearing mechanism, some on the leaf and some on the frame, is each formed by a crenelated structure, two crenelated structures being arranged such that the teeth of one pass through notches of the other as the leaf moves from one position to the other, and such that the teeth of the leaf structure bear, in the closed position, on the inside face of the corresponding teeth of the frame structure. Document US 2005/0133667 A1 discloses a sliding door which can be guided on three rollers on the door side in rails on an aircraft structure, with a locking of such a door occurring by movement of the door parallel to the aircraft X-axis with the locking pins in corresponding sleeves situated on the aircraft structure.

There is, however, a need for improvements in door structures, particularly for aircraft, which require less installation space and are more convenient in operation, while at the same time retaining the ability to effectively transfer pressure-induced loads into the surrounding door frame structures.

This need is met by a door assembly having the features of claim 1, an aircraft having the features of claim 4, and a method for operating a door assembly having the features of claim 6.

A first aspect of the disclosure pertains to a door assembly comprising a door having a door body and a door load bearing beam mounted along the side face of the door body, a door jamb, a door stop rail fixedly attached to the door load bearing beam, the door stop rail projecting outwardly towards the door jamb, and a door jamb stop rail fixedly attached to the door jamb, the door jamb stop rail projecting inwardly towards the door body. The door stop rail and door jamb stop rail each comprise a rail body and a toothed protrusion structure of bearing lugs fixedly attached to the rail body.

According to a second aspect of the disclosure, an aircraft comprises a door assembly according to the first aspect of the disclosure, particularly for an overwing exit of the aircraft.

According to a third aspect of the disclosure, a method for operating a door assembly, particularly a door assembly according to the first aspect of the disclosure of an aircraft according to the second aspect of the disclosure, comprises moving the door body in the direction of extension of the door stop rail and the door jamb stop rail by a distance corresponding to a characteristic width of a bearing lug, and moving the door body perpendicular to the direction of extension of the door stop rail and the door jamb stop rail so that the toothed protrusion structures of bearing lugs of the door stop rail and the door jamb stop rail pass through each other in an intermeshed manner.

The idea on which the present invention is based is to provide for elongated rail structures along a substantial portion of the door edge and the door jamb, with the rail structures being formed in such an outer shape that a plurality of engagement points between the rail structures are formed. At the same time, the engagement points are spaced apart from each other, thereby leaving intermediate recesses through which the rail structures may pass each other when the rail structures are moved parallel to each other by a distance corresponding to a characteristic width of the engagement points.

Such elongated rail structures with toothed protrusions spaced apart along the extension of the rail structures provide for very effective stop members on both the door as well as the door jamb since the loads on the door body may be transferred very evenly distributed and very reliably to the door jamb and, hence, the door surrounding. Moreover, the mechanical failure of a single protruding tooth will not lead to a large imbalance in the load transfer paths in the near vicinity of the mechanical failure.

On the other hand, a large advantage is avoiding a need for larger clearances when the door should be deployed or opened: With the toothed protrusion structures, the lateral displacement that one of the rails will need to make with respect to the counterpart rail is only as large as a characteristic width of one of the protrusions teeth. This advantageously enlarges the overall area of the bearing surfaces (when adding all smaller bearing surface areas of the multitude of the bearing lugs), while retaining the clearance dimensions of a single bearing lug for deploying the door.

In some embodiments, the ratio of the width of the door body and the protruding length of the bearing lugs may be between 15 and 50, particularly between 20 and 50. For example, if the distance between the vertical door jambs in the door frame is 500 mm, the bearing lugs on each side may be implemented with a protruding length and a corresponding overlapping surface of about 10 mm. Due to the fact that the number of bearing lugs may be enlarged by the provision of the toothed protrusion structures, each single bearing lug does not need to be as large as it would need to be, if only a few stops were used. This has the advantage that the clearance between door jamb and door body may be kept very small.

According to the invention, the door stop rail comprises a door stop bearing surface oriented towards an outboard direction, and which, in a locked state of the door assembly, is at least in part in physical contact with a facing door jamb stop bearing surface of the door jamb stop rail oriented towards an inboard direction. The bearing surfaces should advantageously be facing towards each other with the facing plane normal to the pressure-induced load acting on the door body. This gives an optimum mechanical stability and minimum introduction of torsional stress into the stop rails. While the stop rails act as load transfer linkages in the outboard direction, the load bearing beam may be optimized for lateral load transfer within the plane of the door body.

According to the invention, the bearing lugs of the door stop rail and door jamb stop rail have an inverse isosceles trapezoid congruent outer shape. The toothed protrusion structures of the bearing lugs of the door stop rail and door jamb stop rail are shaped such that their respective bearing surfaces mutually detach upon moving the door body from the locked state of the door assembly in the direction of extension of the door stop rail and the door jamb stop rail by a distance corresponding to a characteristic width of a bearing lug, thereby allowing the bearing lugs of the door stop rail to pass between the bearing lugs of the door jamb stop rail and the door to open. In other examples not belonging to the invention the bearing lugs may have a semicircular outer shape or a rectangular outer shape. The particular choice of shape may advantageously depend on the expected maximum load acting on the door body in relation to the desired clearance values. With congruent toothed protrusion structures of variable outer shape, the relative movement of the rails with respect to each other necessary for deploying the door may be adjusted optimally.

According to yet another embodiment of the door assembly, the door stop rail may extend over at least 80% of the height of the door body. This provides for an advantageous load transfer distribution over a significant portion of the door.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a door body of an aircraft door assembly according to an embodiment of the invention.
Fig. 2 schematically illustrates a top view of two operational states of an aircraft door according to a further embodiment of the invention.
Fig. 3 schematically illustrates an outboard facing view of stop members of an aircraft door assembly in two operational states comprising lug shapes having an exemplary configuration.
Fig. 4 schematically illustrates an outboard facing view of stop members of an aircraft door assembly in two operational states comprising lug shapes having an exemplary configuration.
Fig. 5 schematically illustrates an outboard facing view of stop members of an aircraft door assembly in two operational states comprising lug shapes according to the invention.
Fig. 6 schematically illustrates stages of a method for operating an aircraft door assembly according to another embodiment of the invention.
Fig. 7 schematically illustrates an aircraft having at least one aircraft door assembly according to yet a further embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

The following detailed explanation is directed towards door assemblies for use in aircraft, such as overwing exits (OWE) in passenger aircraft, but the guiding principles of the invention may be used for other applications as well, such as door assemblies for coaches, trolleybuses, trains, freight containers or isolating doors for refrigerating chambers or vehicles.

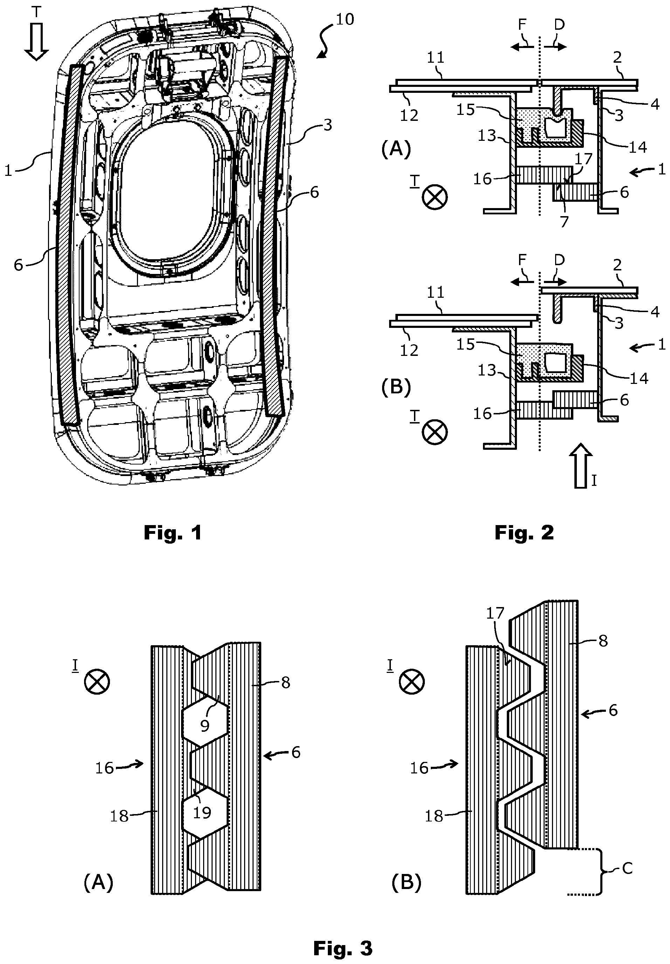

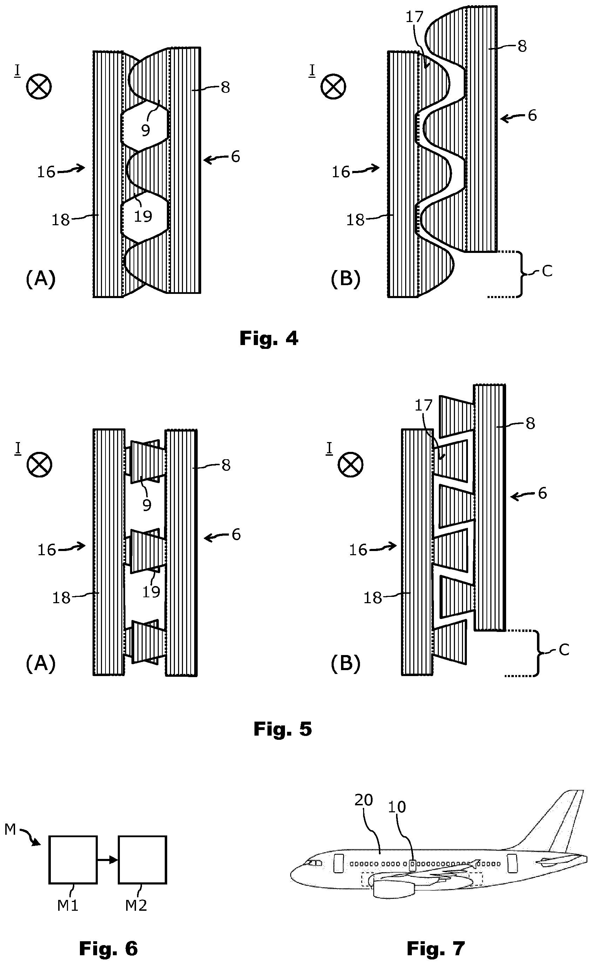

Fig. 1 shows a schematic illustration of a door assembly 10 as it may be employed in an aircraft, particularly a passenger aircraft. The view on the door assembly 10 is exemplarily shown as seen from the inside of a cabin in a passenger aircraft. Fig. 7 exemplarily depicts an aircraft 20 comprising such a door assembly 10 as explained and described in conjunction with Figs. 1 to 5. The door assembly 10 may be used as overwing exit (OWE) in passenger aircraft, but it may be equally possible to equip other exits of the aircraft 20 with the door assemblies 10 as well.

The door assembly 10 generally includes a door having a door body 1 and a door load bearing beam 3 mounted along the side face of the door body 1. The door load bearing beam 3 is equipped with a door stop rail 6 connected to the door load bearing beam 3. The door load bearing beam 3 and, hence, the door stop rail 6 may extend over at least 80% of the height of the door body 1.

What is shown in Fig. 1 is one door load bearing beam 3 with a corresponding door stop rail 6 on both the right and the left side of the door body 1 extending in a generally vertical direction along the edges of the door body. Of course, it may equally be possible to mount door load bearing beams 3 and associated door stop rails 6 attached thereto on the top edge and/or the bottom edge of the door body 1. In the exemplary embodiment of Fig. 1, the door is an outward opening door with a hinge mounted to the top edge of the door body which allows for a Z-motion to clear the door stops, but does not take up loads in outboard direction.

Fig. 2 illustrates two operational states of the door assembly 10 of Fig. 1: Scenario (A) depicts the door assembly 10 in the locked (closed) state of the door with respect to the door frame, and scenario (B) depicts the door assembly in an intermediate unlocked state of the door assembly where the door body 1 has been displaced vertically in the direction of extension of the door stop rail 6 first and after that slightly in outboard direction, the outboard direction generally indicated with the reference sign "I". Both scenarios (A) and (B) in Fig. 2 are shown in a viewing direction from top to bottom, as indicated with the reference sign "T" in Figs. 1 and 2.

As denoted with the reference signs "F" and "D" in Fig. 2, the left hand side of the illustrations shows the fuselage portion of the door assembly 10 and the right hand side of the illustrations shows the door portion of the door assembly 10. The fuselage portion may include a hull or skin of an aircraft with a fuselage fairing panel 11 on the outside and a fuselage lining panel 12 on the inside of the fuselage. Attached to the fuselage, a door jamb 13 may be attached to the fuselage structure forming the frame of the door.

The door jamb 13 may for example formed with C- or Z-shaped beams running along the circumference of the door opening in the fuselage. A seal retainer 14 with a flexible pressure seal 15 fixed therein may be mounted to the door jamb 13 projecting inwards into the door opening and providing a seal for the door against the atmosphere. The door body 1 may have a door fairing 2 on the outside of the door body 1, the door load bearing beam 3 and a door sealing member 4. The door sealing member 4 may include a projecting wedge designed to push into the elastic pressure seal 15 when the door body 1 is inserted into the door opening, thereby causing the material of the pressure seal 15 to elastically deform and fit snugly around the wedge of the sealing member 4 and provide an airtight seal around the perimeter of the door body 1.

The door stop rail 6 projects outwardly towards the door jamb 13 and comprises a door stop bearing surface 7. Similarly, a door jamb stop rail 16 is connected to the door jamb 13, with the door jamb stop rail 16 projecting inwardly towards the door body 1 and comprising door jamb stop bearing surface 17. Both rails 6 and 16 are projecting towards each other with a displacement towards each other when the door body 1 is fully inserted into the door opening. This arrangement may be seen in Fig. 2(A) where the door stop bearing surface 7 of the door stop rail 6 is oriented towards an outboard direction of the door assembly 10 and faces the door jamb stop bearing surface 17 of the door jamb stop rail 16 which is oriented towards an inboard direction of the door assembly 10. The displacement of the two rails 6 and 16 is chosen that the locked state of the door assembly 10 will have the two bearing surfaces 7 and 17 in physical contact with each other. The rails 6 and 16 thereby act as stop members for the door within the door opening.

As can be seen in the exemplary arrangements of Figs. 3, 4 and in the arrangement according of the invention of Fig. 5, the door stop rail 6 and the door jamb stop rail 16 each comprise a rail body 8 and 18, respectively. Figs. 3, 4 and 5 depict the view in the outboard direction "I" of Fig. 2, and scenarios (A) and (B) of Figs. 3, 4 and 5 correspond to the same operational states of the door assembly 10 in Fig. 2, i.e. scenarios (A) of Figs. 3, 4 and 5 depict the orientation of a door stop rail 6 and a door jamb stop rail 16 relative to each other in the locked (closed) state of the door and scenarios (B) of Figs. 3, 4 and 5 depict the orientation of the door stop rail 6 and the door jamb stop rail 16 relative to each other in an unlocked state of the door, where the door body 1 has been displaced vertically within the door frame.

The rail body 8 includes a toothed protrusion structure of bearing lugs 9 that is connected to the rail body 8. Similarly, the rail body 18 includes a toothed protrusion structure of bearing lugs 19 that is connected to the rail body 18. Both protrusion structures may have a congruent outer shape, in a sense that the bearing lugs 9 and 19 have an at least pairwise analogous outer shape. More particularly, all of the bearing lugs 9 and 19 may have a similar outer shape and may be arranged sequentially and equidistantly along the rail bodies 8 and 18.

Between the bearing lugs 9 and 19 there may be recesses. The recesses may preferably be formed in a way that they match the outer shape of the bearing lugs 9 and 19. That way, the vertical displacement of the door stop rail 6 with respect to the door stop jamb rail 16 by a distance C corresponding to the characteristic width of a single bearing lug 9 or 19 causes the bearing surfaces 7 and 17 of the bearing lugs 9 and 19 to slide along one another in a shearing motion until both bearing surfaces 7 and 17 are completely detached. In other words, the position of the toothed protrusion structure of the door stop rail 6 with respect to the door stop jamb rail 16 in the displaced scenario (B) causes the bearing lugs 9 of the door stop rail 6 to be able to be passed through the corresponding recesses between the bearing lugs 19 of the door jamb stop rail 16 without hindrance.

As shown in Figs. 3, 4 and 5, the bearing lugs 9 and 19 of the door stop rail 6 and door jamb stop rail 16 may have a congruent outer shape, in exemplary variants not forming part of the invention an isosceles trapezoid outer shape (Fig. 3) or a roughly semi-circular or semi-elliptical outer shape (Fig. 4), or in accordance with the invention an inverse isosceles trapezoid outer shape (Fig. 5). Of course, other outer shapes, such as a rectangular outer shape may be equally possible. The number of bearing lugs 9 and 19 is exemplarily shown as being three for purposes of illustration in the drawings, however, any other number of bearing lugs 9 and 19 may be equally possible. In particular, the number of bearing lugs 9 and 19 may be adapted to the length of the rails 6 and 16 and a corresponding characteristic width of a single one of the bearing lugs 9 and 19.

Fig. 6 schematically illustrates stages of a method M for operating a door assembly, for example a door assembly 10 as explained in conjunction with Figs. 1 to 5. The method M may be specifically used for operating door assemblies 10 on board of an aircraft, such as the aircraft 20 as depicted in Fig. 7.

In a first stage M1, the method M involves moving the door body 1 in the direction of extension of the door stop rail 6 and the door jamb stop rail 16. That way, the door stop rail 6 and the door jamb stop rail 16 perform a shearing movement with the facing bearing surfaces 7 and 17 moving along each other. The door body 1 may be moved by a distance that corresponds to a characteristic width of one of the bearing lugs 9 and 19, respectively. In other words, the clearance C that needs to be provided for disengaging the bearing surfaces 7 and 17 may be very small compared to the extension of the rails 6 and 16.

When the door body 1 has been moved upwards or downwards within the door jamb opening by the distance C the method M then involves moving the door body 1 perpendicular to the direction of extension of the door stop rail 6 and the door jamb stop rail 16 in order to open the door in a stage M2. After the initial disengagement of the rails 6 and 16, the toothed protrusion structures of bearing lugs 9 and 19 are interleaving in such a way that the door stop rail 6 and the door jamb stop rail 16 may pass through each other in an intermeshed manner, i.e. the bearing surfaces 7 and 17 of each of the bearing lugs 9 and 19 pass through the respective recesses in the other rail 6 and 16 between adjacent bearing lugs 19 and 9, respectively.

While the disengaging movement in lateral direction, i.e. upwards or downwards with vertically aligned door stop rail 6 and door stop jamb rail 16, a stop clearance C may be reached with very little distance to move. The opening of the cleared door 1 may then be effected in an outward motion without the door stop rail 6 and door stop jamb rail 16 blocking each other. The door stop rail 6 and door stop jamb rail 16 effectively provide for a multi-stop contour with the bearing lugs 9 and 19 forming a multitude of separate stop members engaging over a comparatively large distance. This means that the load transfer between neighboring and facing bearing lugs 9 and 19 as stop members is nearly continuous, thereby avoiding focal points of high loads and providing an even load distribution of the whole door stop jamb rail 16. Such a load distribution provides high tolerance towards failure of single bearing lugs and a simple and cost-efficient manufacturing process for the rails 6 and 16.

In the foregoing detailed description, various features are grouped together in one or more examples or examples with the purpose of streamlining the disclosure. It is to be understood that the above description is intended to be illustrative, and not restrictive, the scope of the invention being defined by the appended claims.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Door body
- 2: Door fairing
- 3: Door load bearing beam
- 4: Door sealing member
- 6: Door stop rail
- 7: Bearing surface
- 8: Rail body
- 9: Bearing lug
- 10: Door assembly
- 11: Fuselage fairing
- 12: Cabin lining
- 13: Door jamb
- 14: Seal retainer
- 15: Pressure seal
- 16: Door jamb stop rail
- 17: Bearing surface
- 18: Rail body
- 19: Bearing lug
- 20: Aircraft
- C: Clearance
- D: Door portion
- F: Fuselage portion
- I: Outboard viewing direction
- M: Method
- M1: Method step
- M2: Method step
- M3: Method step
- M4: Method step
- T: Top viewing direction

## Claims

1. Door assembly (10), comprising:
a door having a door body (1) opening in an outboard direction and a door load bearing beam (3) mounted along the side face of the door body (1);
a door jamb (13);
a door stop rail (6) fixedly attached to the door load bearing beam (3), the door stop rail (6) projecting outwardly towards the door jamb (13); and
a door jamb stop rail (16) fixedly attached to the door jamb (13), the door jamb stop rail (16) projecting inwardly towards the door body (1),
wherein the door stop rail (6) and door jamb stop rail (16) each comprise a rail body (8; 18) and a toothed protrusion structure of bearing lugs (9; 19) fixedly attached to the rail body (8; 18), the door stop rail (6) comprising a door stop bearing surface (7) oriented towards an outboard direction, and which, in a locked state of the door assembly (10) is at least in part in physical contact with a facing door jamb stop bearing surface (17) of the door jamb stop rail (16) oriented towards an inboard direction,
**characterized in that** the bearing lugs (9; 19) of the door stop rail (6) and door jamb stop rail (16) have an inverse isosceles trapezoid congruent outer shape, the toothed protrusion structures of bearing lugs (9; 19) of the door stop rail (6) and door jamb stop rail (16) being shaped such that their respective bearing surfaces (7, 17) mutually detach upon moving the door body (1) from the locked state of the door assembly (10) in the direction of extension of the door stop rail (6) and the door jamb stop rail (16) by a distance (C) corresponding to a characteristic width of a bearing lug (9; 19), thereby allowing the bearing lugs (9) of the door stop rail (6) to pass between the bearing lugs (19) of the door jamb stop rail (16) and the door to open.

2. Door assembly (10) according to claim 1, wherein the door stop rail (6) extends over at least 80% of the height of the door body (1).

3. Door assembly (10) according to one of the claims 1 to 2, wherein the ratio of the width of the door body (1) and the protruding length of the bearing lugs (9; 19) is between 15 and 50, particularly between 20 and 50.

4. Aircraft (20), comprising an aircraft door with a door assembly (10) according to one of the claims 1 to 3.

5. Aircraft (20) according to claim 4, wherein the aircraft door is an overwing exit.

6. Method (M) for operating a door assembly (10), the door assembly (10) comprising:
a door with a door body (1) and a door load bearing beam (3) mounted along the side face of the door body (1),
a door jamb (13),
a door stop rail (6) fixedly attached to the door load bearing beam (3), the door stop rail (6) projecting outwardly towards the door jamb (13), and
a door jamb stop rail (16) fixedly attached to the door jamb (13), the door jamb stop rail (16) projecting inwardly towards the door body (1), the door stop rail (6) comprising a door stop bearing surface (7) facing a door jamb stop bearing surface (17) of the door jamb stop rail (16), wherein the door stop rail (6) and door jamb stop rail (16) each comprise a rail body (8; 18) and a toothed protrusion structure of bearing lugs (9; 19) of inverse isosceles trapezoid congruent outer shape connected to the rail body (8; 18),
the method comprising:
moving (M1) the door body (1) in the direction of extension of the door stop rail (6) and the door jamb stop rail (16) by a distance (C) corresponding to a characteristic width of a bearing lug (9; 19); and
moving (M2) the door body (1) perpendicular to the direction of extension of the door stop rail (6) and the door jamb stop rail (16) so that the toothed protrusion structures of bearing lugs (9; 19) of the door stop rail (6) and the door jamb stop rail (16) pass through each other in an intermeshed manner.

## Patentansprüche

1. Türanordnung (10), umfassend:
eine Tür, die einen Türkörper (1), der in eine Außenbordrichtung öffnet, und einen Türlast tragenden Balken (3), der entlang der Seitenfläche des Türkörpers (1) montiert ist, hat,
einen Türpfosten (13),
eine Türanschlagschiene (6), die an dem Türlast tragenden Balken (3) fest angebracht ist, wobei die Türanschlagschiene (6) nach außen hin zu dem Türpfosten (13) vorsteht, und
eine Türpfostenanschlagschiene (16), die an dem Türpfosten (13) fest angebracht ist, wobei die Türpfostenanschlagschiene (16) nach innen hin zu dem Türkörper (1) vorsteht,
wobei die Türanschlagschiene (6) und die Türpfostenanschlagschiene (16) jeweils einen Schienenkörper (8; 18) und eine gezahnte Vorsprungstruktur aus Lageraugen (9; 19) umfassen, die an dem Schienenkörper (8; 18) fest angebracht sind, wobei die Türanschlagschiene (6) eine Türanschlag tragende Fläche (7) umfasst, die hin zu einer Außenbordrichtung ausgerichtet ist und die in einem verriegelten Zustand der Türanordnung (10) zumindest teilweise mit einer zugewandten Türpfostenanschlag tragenden Fläche (17) der Türpfostenanschlagschiene (16), die hin zu einer Innenbordrichtung ausgerichtet ist, in physischem Kontakt ist,
**dadurch gekennzeichnet, dass** die Lageraugen (9; 19) der Türanschlagschiene (6) und Türpfostenanschlagschiene (16) eine zu einem invertierten gleichschenkligen Trapez kongruente äußere Form haben, wobei die gezahnten Vorsprungstrukturen aus Lageraugen (9; 19) der Türanschlagschiene (6) und Türpfostenanschlagschiene (16) derart geformt sind, dass sich ihre jeweiligen tragenden Flächen (7, 17) bei einem Bewegen des Türkörpers (1) von dem verriegelten Zustand der Türanordnung (10) in die Erstreckungsrichtung der Türanschlagschiene (6) und der Türpfostenanschlagschiene (16) um einen Abstand (C), der einer kennzeichnenden Breite eines Lagerauges (9; 19) entspricht, voneinander lösen, wodurch es den Lageraugen (9) der Türanschlagschiene (6) ermöglicht wird, zwischen den Lageraugen (19) der Türpfostenanschlagschiene (16) zu verlaufen, und der Tür, sich zu öffnen.

2. Türanordnung (10) nach Anspruch 1, wobei sich die Türanschlagschiene (6) über mindestens 80 % der Höhe des Türkörpers (1) erstreckt.

3. Türanordnung (10) nach einem der Ansprüche 1 bis 2, wobei das Verhältnis der Breite des Türkörpers (1) und der vorstehenden Länge der Lageraugen (9; 19) zwischen 15 und 50, insbesondere zwischen 20 und 50 liegt.

4. Luftfahrzeug (20), umfassend eine Luftfahrzeugtür mit einer Türanordnung (10) nach einem der Ansprüche 1 bis 3.

5. Luftfahrzeug (20) nach Anspruch 4, wobei die Luftfahrzeugtür ein Ausgang über einem Flügel ist.

6. Verfahren (M) zum Betätigen einer Türanordnung (10), wobei die Türanordnung (10) Folgendes umfasst:
eine Tür mit einem Türkörper (1) und einem Türlast tragenden Balken (3), der entlang der Seitenfläche des Türkörpers (1) montiert ist,
einen Türpfosten (13),
eine Türanschlagschiene (6), die an dem Türlast tragenden Balken (3) fest angebracht ist, wobei die Türanschlagschiene (6) nach außen hin zu dem Türpfosten (13) vorsteht, und
eine Türpfostenanschlagschiene (16), die an dem Türpfosten (13) fest angebracht ist, wobei die Türpfostenanschlagschiene (16) nach innen hin zu dem Türkörper (1) vorsteht, wobei die Türanschlagschiene (6) eine Türanschlag tragende Fläche (7) umfasst, die einer Türpfostenanschlag tragenden Fläche (17) der Türpfostenanschlagschiene (16) zugewandt ist, wobei die Türanschlagschiene (6) und Türpfostenanschlagschiene (16) jeweils einen Schienenkörper (8; 18) und eine gezahnte Vorsprungstruktur aus Lageraugen (9; 19) von zu einem invertierten gleichschenkligen Trapez kongruenter äußerer Form umfassen, die mit dem Schienenkörper (8; 18) verbunden ist,
wobei das Verfahren Folgendes umfasst:
Bewegen (M1) des Türkörpers (1) in die Erstreckungsrichtung der Türanschlagschiene (6) und der Türpfostenanschlagschiene (16) um einen Abstand (C), der einer kennzeichnenden Breite eines Lagerauges (9; 19) entspricht, und
Bewegen (M2) des Türkörpers (1) senkrecht zu der Erstreckungsrichtung der Türanschlagschiene (6) und der Türpfostenanschlagschiene (16), so dass die gezahnten Vorsprungstrukturen aus Lageraugen (9; 19) der Türanschlagschiene (6) und der Türpfostenanschlagschiene (16) durcheinander in einer ineinandergreifenden Weise verlaufen.

## Revendications

1. Ensemble porte (10) comprenant :
une porte ayant un corps de porte (1) s'ouvrant dans une direction extérieure et une poutre porteuse de porte (3) montée le long de la face latérale du corps de porte (1) ;
un montant de porte (13) ;
un rail de butée de porte (6) fixé de manière fixe à la poutre porteuse de porte (3), le rail de butée de porte (6) faisant saillie vers l'extérieur en direction du montant de porte (13) ; et
un rail de butée de montant de porte (16) fixé de manière fixe au montant de porte (13), le rail de butée de montant de porte (16) faisant saillie vers l'intérieur en direction du corps de porte (1),
dans lequel le rail de butée de porte (6) et le rail de butée de montant de porte (16) comprennent chacun un corps de rail (8 ; 18) et une structure de protubérances dentées constituée de pattes d'appui (9 ; 19) fixée de manière fixe au corps de rail (8 ; 18), le rail de butée de porte (6) comprenant une surface d'appui de butée de porte (7) orientée vers l'extérieur et qui, dans un état verrouillé de l'ensemble porte (10), est au moins partiellement en contact physique avec un une surface d'appui de butée de montant de porte (17) du rail de butée de montant de porte (16) orientée vers l'intérieur,
**caractérisé en ce que** les pattes d'appui (9 ; 19) du rail de butée de porte (6) et du rail de butée de montant de porte (16) ont une forme extérieure congruente trapézoïdale isocèle inverse, les structures de protubérances dentées constituées de pattes d'appui (9 ; 19) du rail de butée de porte (6) et du rail de butée de montant de porte (16) étant conformées de telle sorte que leurs surfaces d'appui respectives (7, 17) se séparent mutuellement lors du déplacement du corps de porte (1) à partir de l'état verrouillé de l'ensemble porte (10) dans la direction d'extension du rail de butée de porte (6) et du rail de butée de montant de porte (16) d'une distance (C) correspondant à une largeur caractéristique d'une patte d'appui (9 ; 19), permettant ainsi aux pattes d'appui (9) du rail de butée de porte (6) de passer entre les pattes d'appui (19) du rail de butée de montant de porte (16) et à la porte de s'ouvrir.

2. Ensemble porte (10) selon la revendication 1, dans lequel le rail de butée de porte (6) s'étend sur au moins 80 % de la hauteur du corps de porte (1).

3. Ensemble porte (10) selon l'une des revendications 1 à 2, dans lequel le rapport entre la largeur du corps de porte (1) et la longueur de protubérance des pattes d'appui (9 ; 19) est compris entre 15 et 50, en particulier entre 20 et 50.

4. Aéronef (20) comprenant une porte d'aéronef avec un ensemble porte (10) selon l'une des revendications 1 à 3.

5. Aéronef (20) selon la revendication 4, dans lequel la porte d'aéronef est une issue d'évacuation sur l'aile.

6. Procédé (M) de fonctionnement d'un ensemble porte (10), l'ensemble porte (10) comprenant : une porte avec un corps de porte (1) et une poutre porteuse de porte (3) montée le long de la face latérale du corps de porte (1),
un montant de porte (13),
un rail de butée de porte (6) fixé de manière fixe à la poutre porteuse de porte (3), le rail de butée de porte (6) faisant saillie vers l'extérieur en direction du montant de porte (13), et
un rail de butée de montant de porte (16) fixé de manière fixe au montant de porte (13), le rail de butée de montant de porte (16) faisant saillie vers l'intérieur vers le corps de porte (1), le rail de butée de porte (6) comprenant une surface d'appui de butée de porte (7) faisant face à une surface d'appui de butée de montant de porte (17) du rail de butée de montant de porte (16), dans lequel le rail de butée de porte (6) et le rail de butée de montant de porte (16) comprennent chacun un corps de rail (8 ; 18) et une structure de protubérances dentées constituée de pattes d'appui (9 ; 19) de forme extérieure congruente trapézoïdale isocèle inverse reliée au corps de rail (8 ; 18),
le procédé comprenant de :
déplacer (M1) le corps de porte (1) dans la direction d'extension du rail de butée de porte (6) et du rail de butée de montant de porte (16) d'une distance (C) correspondant à une largeur caractéristique d'une patte d'appui (9 ; 19) et
déplacer (M2) le corps de porte (1) perpendiculairement à la direction d'extension du rail de butée de porte (6) et du rail de butée de montant de porte (16) de telle sorte que les structures de protubérances dentées constituées de pattes d'appui (9 ; 19) du rail de butée de porte (6) et du rail de butée de montant de porte (16) se traversent mutuellement d'une manière enchevêtrée.
